# EUROPÄISCHE PATENTSCHRIFT

(11) **EP 2 160 101 B1**
(45) Veröffentlichungstag und Bekanntmachung des Hinweises auf die Patenterteilung: **08.06.2011**
(21) Anmeldenummer: 08706847.4
(22) Anmeldetag: 01.02.2008
(51) Int. Cl.: A22C 25/20, A23L 1/325

(54) **VERFAHREN ZUR HERSTELLUNG VON WURSTWAREN BASIEREND AUF FISCHFLEISCH UND WURSTWAREN BEINHALTEND FISCHFLEISCH**
METHOD FOR THE PRODUCTION OF SAUSAGE PRODUCTS BASED ON FISH MEAT, AND SAUSAGE PRODUCTS CONTAINING FISH MEAT
PROCÉDÉ DE FABRICATION DE SAUCISSE À BASE DE CHAIR DE POISSON ET SAUCISSE CONTENANT DE LA CHAIR DE POISSON

(30) Priorität: 01.06.2007 DE 102007025847
(43) Veröffentlichungstag der Anmeldung: 10.03.2010
(73) Patentinhaber: Fraunhofer-Gesellschaft zur Förderung der angewandten Forschung e.V., 80686 München (DE)
(72) Erfinder: EISNER, Peter, 85354 Freising (DE); MÜLLER, Klaus, 85354 Freising (DE); ZACHERL, Christian, 85354 Freising (DE); HAUTZ, Jürgen, 66606 St. Wendel (DE)
(74) Vertreter: Wiedemann, Markus
(86) Internationale Anmeldenummer: PCT/DE2008/000182
(87) Internationale Veröffentlichungsnummer: WO 2008/145076

(56) Entgegenhaltungen:
- EP-A- 1 180 333
- WO-A-93/00830
- DE-U1- 20 104 242

## Beschreibung

### Stand der Technik

Die Erfindung betrifft ein Verfahren zur Herstellung von Wurstwaren basierend auf Fischfleisch, gemäß dem Oberbegriff von Anspruch 1 sowie Wurstwaren beinhaltend Fischfleisch gemäß dem Oberbegriff von Anspruch 20.

Ein Verfahren zur Herstellung von Wurstwaren basierend auf Fischfleisch bzw. Wurstwaren aus Fischfleisch sind aus der WO 93/00830 bekannt. Bei dem bekannten Verfahren wird Fischfleisch in ungefrorenem oder angefrorenem Zustand zusammen mit Eis zerkleinert und zu einem Grundbrät gemischt. Das Eis stammt dabei aus einem sog. freezer und weist typischerweise eine Temperatur größer als -5°C auf. Als Fischfleisch wird Fleisch vom Thunfisch, vom Haifisch oder auch von der Forelle verwendet. Um eine für typische Brühwurstprodukte oder Schnittwurstprodukte ausreichende Bindigkeit und Konsistenz zu erhalten, wird im Rahmen des bekannten Herstellungsverfahrens Pflanzenöl zugegeben. Als Bindigkeit oder Konsistenz wird hierbei eine Eigenschaft des Grundbräts bezeichnet, welche zu einer angenehm typischen Textur der Wurstwaren führt. Eine zu niedrige Bindigkeit führt beispielsweise zu bröckeligen, inhomogenen, und einer zu weichen Textur.

Bereits bekannte Wurstwaren, die aus Fischfleisch hergestellt werden, weisen ein typisches Fischaroma auf. Hauptursache hierfür ist neben der Rohstoffauswahl besonders die Temperatur während der Grundbrätherstellung im Kutter. So entwickeln sich fischtypische Aromen bei der konventionellen Herstellung besonders schnell aufgrund der erhöhten Temperaturen, die an den Kuttermessern auftreten. In Folge dessen enthält die Wurstmasse nach dem Kuttern einen deutlichen Anteil an Aromen, die sich bei der Oxidation von Fischkomponenten ausbilden. Diese Substanzen werden bei der sensorischen Bewertung von Fischprodukten mit den Merkmalsbeschreibungen "fischig" oder "fischtypisch" beschrieben. Dieser Beigeschmack führt bei einem Teil der Bevölkerung zur Ablehnung von Fischprodukten, was auch der Grund dafür ist, dass sich Wurstprodukte auf der Basis von Fisch auf dem Markt noch nicht etablieren konnten.

In der gattungsgemäßen EP 1 180 333 A1 wird ein Fischerzeugnis beschrieben, weiches aus Wels- und Lachsfleisch gewonnen wird, wobei nach einer Zerkleinerung des Fischfleischs Wasser und/oder Eis zugegeben wird.

### Aufgabe der Erfindung

Der Erfindung liegt demgegenüber die Aufgabe zugrunde, ein Verfahren zur Herstellung von Wurstwaren auf der Basis von Fischfleisch anzugeben, weiche hinsichtlich Bindigkeit und Konsistenz wenigstens annährend die Textur von herkömmlichen Wurstprodukten basierend auf Säugetier- oder Geflügelfleisch aufweisen. Diese Texturausbildung soll insbesondere ohne den Zusatz von Fremdfetten oder einen hohen Eigenfettanteil erreichbar sein. Weiterhin sollte der Geschmack der nach dem Verfahren hergestellten Wurstwaren nicht zu sehr an Fisch orientiert sein.

Diese Aufgabe wird erfindungsgemäß durch die Merkmale der Ansprüche 1 und 20 gelöst.

Die Erfindung betreffend das Herstellverfahren basiert auf dem Gedanken, dass das das bei der Herstellung des Grundbräts verwendete Eis eine Temperatur kleiner als -10C aufweist und dass als Fleisch ausschließlich Fischfleisch und als Fischfleisch ausschließlich Fischfleisch von einem Süsswasserwels der Überklasse Heterobranchidae verwendet wird, wobei dem Grundbrät zusätzlich Pflanzenprotein zugegeben wird. Die Anmelderin hat nämlich herausgefunden, dass das Fleisch dieser Fische ausgesprochen neutrale sensorische Eigenschaften aufweist, d.h. dass der Geschmack von auf dem Fleisch dieser Fisch basierenden Wurstwaren nicht zu sehr an Fisch erinnert und deshalb eine höhere Akzeptanz von Verbrauchern zu erwarten ist, welche einen typischen Fischgeschmack eher ablehnen.

Bei dem Versuch, ein Grundbrät für Wurstwaren aus dem Fleisch dieser Fische herzustellen, zeigte sich außerdem überraschenderweise, dass kein zusätzliches Fett oder Öl zugegeben werden musste, um eine hervorragende Bindigkeit des Grundbräts sowie sehr gute Textureigenschaften der Wurstprodukte zu erzielen.

Weil bei der Herstellung von Wurstwaren aus dem Fleisch der oben genannten Fische kein zusätzliches Fett zugegeben werden musste, können Wurstprodukte mit Gesamtfettgehalten von weniger als 7% erreicht werden. Bei Verwendung besonders fettarmer Filets dieses Fischs kann sogar ein Fettgehalt von weniger als 3% erreicht werden, ohne dass die Bindigkeit des Grundbräts negativ beeinflusst wird. Das verwendete Fischfleisch sollte einen Fettgehalt kleiner 7%, besonders bevorzugt kleiner als 5% aufweisen. Hiermit wird eine sehr magere Grundbrätmasse mit einem Fettgehalt kleiner 5%, vorzugsweise kleiner 4% erhalten. In einigen Versuchen mit besonders ausgewählten Filetstücken konnten sogar Wurstprodukte mit Fettgehalten unter 2% erhalten werden.

Je nach Verbraucherwunsch ist es jedoch auch möglich, den Fettgehalt der Wurstprodukte durch unterschiedlich hohe Zugabe von Fremdfetten oder Fremdölen zu erhöhen.

Weiterhin zeigte sich, dass bei der Grundbrätzubereitung durch Zugabe von sehr kaltem Eis mit Temperaturen kleiner als -10°C die durch die Verwendung des speziellen Fischfleischs ohnehin gute Bindigkeit und Konsistenz der daraus hergestellten Wurst noch weiter gesteigert wird. Denn die relativ niedrige Temperatur des Eises sorgt dafür, dass die im Fischfleisch enthaltenen Einweiße besser aufgeschlossen bzw. gelöst werden, wobei gut aufgeschlossene Eiweiße bzw. gut gelöste Eiweiße die Eigenschaft besitzen, viel Wasser aufnehmen zu können. Deshalb ermöglicht das beim Kuttervorgang verwendete relativ kalte Eis, viel Wasser in die Wurstmatrix einzubinden, was die Saftigkeit und Bindigkeit der Fischwurstprodukte erhöht.

Besondere Vorteile ergeben sich durch die Herstellung eines Grundbräts für die Fischwurst durch Kuttern von Fischfilet aus Heterobranchidae zusammen mit sehr kaltem Eis mit einer Temperatur kleiner als -10°C gegebenenfalls zusammen mit Salz und/oder Nitritpökelsalz und/oder Gewürzen und/oder Kutterhilfsmittel, jedoch ohne Zusatz von weiterem, nicht bereits im Fischfleisch vorhandenem Fett wie Speck, Öl oder Fettersatzstoffen und ohne Zusatz von Farbstoffen in einem Kutter.

Besondere Vorteile hinsichtlich Bindigkeit und Textur des Wurstbräts konnten auch durch eine Verwendung von Fischfleisch einer Kreuzung aus Clarias gariepinus und Heterobranchus longifillis erreicht werden, welche beide der Überklasse Heterobranchidae zuzuordnen sind. Vorteilhaft bei einer Verwendung von Fischfleisch dieser Kreuzung ist weiterhin ein sehr neutrales Aroma ohne fischtypischen Geschmack sowie eine sehr saftige und bissfeste Textur der Wurstwaren, ohne dass eine Zugabe von Fremdfett oder Fremdöl notwendig ist.

Das so erhaltene Grundbrät kann für eine Vielzahl von Brühwurstartikeln als Basis genutzt werden, wie Lyoner, Schinkenwurst, Wiener Würstchen, Fleischkäse, Brühwurst mit Einlagen oder Ähnliches. Wenn während des Kutterns statt Nitritpökelsalz normales Speisesalz verwendet wird, können auch Bratwürste, Weißwürste oder Gelbwurstvariationen hergestellt werden.

Die Textur wird besonders ansprechend, wenn das gesamte Eis zu Beginn des Kuttervorgangs zugesetzt wird, wobei das Eis eine Temperatur kleiner als -10°C, besonders bevorzugt kleiner als - 20°C aufweist und der Massenanteil des Eises bezogen auf die gesamte Masse des Grundbräts mindestens 20% beträgt. Hinsichtlich des sensorischen Eindrucks "Saftigkeit" ist es vorteilhaft, den Gehalt an Eis auf Werte zwischen 20% und 45% einzustellen.

Die zur Herstellung der Grundbräts verwendete Eismenge wird so bemessen, dass bis zum Schmelzen des zugesetzten Eises dem Grundbrät eine spezifische Energiemenge von mindestens 100kJ/kg, bevorzugt mehr als 125kJ/kg, besonders bevorzugt mehr als 150kJ/kg bezogen auf die Masse des Grundbräts entzogen werden

Hinsichtlich des gesundheitlichen Wertes von Lebensmitteln ist in Wurstwaren neben dem Gesamtfettgehalt auch die Fettsäurezusammensetzung ein wichtiges Kriterium. Es sollte versucht werden, einen möglichst hohen Gehalt an Omega 3-Fettsäuren in die Wurst einzuarbeiten, ohne gleichzeitig den Fettgehalt zu sehr anzuheben.

Eine Anreicherung mit Omega 3-Fettsäure kann vor allem mit pflanzlichen Ölen erreicht werden, die reich an Omega 3-Fettsäuren sind, wie z.B. mit Rapsöl. Auch für diesen ernährungsphysiologischen Aspekt bietet das erfindungsgemäße Wurstprodukt deutliche Vorteile. Durch die hohe Bindigkeit des Rohstoffs in Kombination mit der Herstellung bei niedrigen Temperaturen ist man in der Lage, den Fett- oder Öltyp unabhängig von der Viskosität frei zu wählen. In vielen Fällen ist das nicht möglich, da niedrig viskose Öle sehr leicht aus der Wurstmatrix austreten können. Beim erfindungsgemäßen Produkt kann der Fettgehalt durch Zusatz von Öl bis zu einem Wert von etwa 10% angehoben werden, ohne Einbußen in der Wursttextur zu erhalten. Dabei zeigt sich, dass die Textur besonders vorteilhaft ist, wenn durch Zusatz von Pflanzenölen in der Wurst ein Gesamtfettgehalt von 8% nicht überschritten wird. Bei Zusatz höherer Ölmengen kann Öl aus der Matrix austreten. Das Produkt wirkt dann fettig, was von den Konsumenten abgelehnt wird.

Manche Konsumenten achten bei ihrer Ernährung darauf, dass das Verhältnis bestimmter Aminosäuren ernährungsphysiologisch vorteilhaft ist. Zur Verbesserung des Aminosäurespektrums von Fischfleisch ist es sinnvoll, pflanzliches Protein zuzugeben. Dieses kann zum Beispiel aus Erbsen, Sojabohnen, Lupinen oder Ackerbohnen stammen. Besonders vorteilhaft ist eine Zugabe von Pflanzenprotein bis zu 8% bezogen auf die Gesamtbrätmasse. Dabei erhält man ein Wurstprodukt mit einem sehr ausgewogenen Aminosäureverhältnis, was ernährungsphysiologisch überaus vorteilhaft ist.

Aufgrund der überraschend guten Bindeeigenschaften des von Heterobranchidae stammenden Fischfleischs ist es sogar möglich, Rohwurstwaren wie Salami oder Rohstreichwurst ohne den Zusatz von Fett herzustellen, die mit vollfetten Rohwurstprodukten vergleichbare sensorische Eigenschaften aufweisen.

Besonders vorteilhaft sind außerdem Zugaben von unlöslichen mikropartikulierten oder mikrokugelförmigen Proteinpräparaten aus Pflanzenprotein und/oder Molkenprotein bei der Herstellung von Rohstreichwurstwaren. Dadurch kann eine besonders geschmeidige Textur sowie ein sehr glattes Mundgefühl erreicht werden, ohne dass ein Zusatz von Fremdfetten notwendig wäre.

Gemäß einer Weiterbildung kann eine Zugabe von Pflanzenölen mit einem hohen Anteil von Omega 3 Fettsäuren vorteilhaft sein, um die Wurstprodukte mit den wertvollen Omega 3 Fettsäuren anzureichern. Gemäß einer weiteren Ausgestaltung können die Rohwurstprodukte mit Pflanzenprotein angereichert werden, um den Arginingehalt der Produkte zu erhöhen. Besonders vorteilhaft ist die Zugabe von bis zu 10% Lupinenprotein oder Erbsenprotein.

Ebenso können aus von Heterobranchidae stammendem Fischfilet und der Leber dieser Tiere Kochwurstwaren wie Streichleberwurst oder Leberpasteten hergestellt werden. Es zeigte sich, dass eine besonders cremige Kochwurst erreicht wird, wenn das Fischfleisch vor dem Kuttern nicht gekocht, sondern bei Temperaturen von weniger als 85°C, bevorzugt von weniger als 75°C gebrüht wird. Hierdurch wird eine besonders saftige Wurststruktur erhalten.

Die bevorzugte Kuttertemperatur zur Herstellung des Kochwurstbräts aus der frischen Fischleber und dem gebrühte Fischfleisch beträgt mehr als 40°C, besonders bevorzugt mehr als 50°C. Hierdurch wird die Fischleber besonders gut aufgeschlossen.

Gemäß einer Alternative werden das Fischfleisch und die Fischleber zu Beginn des Kuttervorganges trocken, d.h. zunächst ohne Eis oder Wasser gekuttert und erst kurz vor dem Ende des Kuttervorganges die restlichen Zutaten, u.a. Eis oder Wasser zugesetzt. Diese Prozessführung ermöglicht es, auf Emulgatoren als Zusatzstoffe zu verzichten.

Die Cremigkeit in der Wurst kann verbessert werden, wenn ihr bei der Herstellung im Kutter bis zu 3% Hydrokolloide auf Basis von Kohlehydraten zugesetzt werden. Besondere Vorteile ergeben sich beim Einsatz von Xanthan in Gew.-Anteilen von 0,5 bis 1% bezogen auf die Gesamtmasse.

Die Cremigkeit in der Wurst kann auch verbessert werden, wenn ihr bei der Herstellung im Kutter bis zu 4% Pflanzenprotein zugegeben werden. Besonders positive Eigenschaften werden bei Verwendung von Leguminosenproteinen wie Lupinenproteinen erhalten. Nach Zusatz von Lupinenprotein im Kutter werden Kochwürste, trotz des geringen Fettgehaltes von weniger als 3% streichzart und sehr cremig. Dies gelingt besonders gut, unter Zugabe von unlöslichen mikropartikulierten oder mikrokugelförmigen Proteinpräparaten aus Pflanzenprotein und/oder Molkenprotein. Wenn die Erhitzungstemperatur der in Därmen oder Gläsern abgefüllten Kochwurst kleiner 75 °C gehalten wird, ist das Streichverhalten besonders gut, da keine vollständige Denaturierung der Pflanzenproteine erfolgt. Der Einsatz von feuchtem Pflanzenproteinen oder gefrorener, wässriger Proteinlösung bringt besondere Vorteile, da die Proteinlöslichkeit hier besonders hoch ist.

Die Struktur der Kochwurst kann durch die Zugabe von Faserprodukten verbessert werden hierzu eignen sich handelsübliche Faserprodukte, zum Beispiel aus Weizen, Leguminosen oder Hafer.

Eine besonders cremige Struktur wird erhalten, wenn die Brühtemperatur gerade unterhalb der Denaturierungstemperatur der Pflanzenproteine, aber überhalb der Denaturierungstemperatur von Leber, sowie überhalb der erforderlichen Pasteurisierungstemperatur liegt.

Gemäß einer besonderen Ausgestaltung des Verfahrens zur Herstellung einer Leberwurst wird der Brühvorgang bei Aufheiz- und Abkühlraten <5K/min durchgeführt.

Bioaktive Wurstprodukte können erhalten werden, wenn sekundäre Pflanzeninhaltsstoffe zugesetzt werden.

## Patentansprüche

1. Verfahren zur Herstellung von Wurstwaren basierend auf Fischfleisch, wobei das Fischfleisch zusammen mit Eis zu einem Grundbrät verarbeitet wird, **dadurch gekennzeichnet, dass** das Eis eine Temperatur kleiner als -10°C aufweist und dass als Fleisch ausschließlich Fischfleisch und als Fischfleisch ausschließlich Fischfleisch von einem Süsswasserwels der Überklasse Heterobranchidae verwendet wird, wobei dem Grundbrät zusätzlich Pflanzenprotein zugegeben wird.

2. Verfahren nach Anspruch 1, **dadurch gekennzeichnet, dass** wenigstens ein Teil des Fischfleischs von einer Kreuzung eines Clarias gariepinus mit einem Heterobranchus longifillis stammt.

3. Verfahren nach wenigstens einem der vorhergehenden Ansprüche, **dadurch gekennzeichnet, dass** das für die Herstellung der Grundbrätmasse verwendete Fischfleisch einen Fettgehalt kleiner 7%, vorzugsweise kleiner 5%, besonders bevorzugt kleiner als 3% aufweist.

4. Verfahren nach wenigstens einem der vorhergehenden Ansprüche, **dadurch gekennzeichnet, dass** zur Herstellung des Grundbräts zusätzlich Salz und/oder Nitritpökelsalz und/oder Gewürze und/oder Kutterhilfsmittel zugegeben werden.

5. Verfahren nach wenigstens einem der vorhergehenden Ansprüche, **dadurch gekennzeichnet, dass** Fischfleisch wenigstens zusammen mit dem Eis in einem Kutter zum Grundbrät verarbeitet wird.

6. Verfahren nach Anspruch 5, **dadurch gekennzeichnet, dass** das Eis zu Beginn des Kuttervorgangs zugesetzt wird.

7. Verfahren nach Anspruch 5 oder 6, **dadurch gekennzeichnet, dass** das Fischfleisch vor dem Kuttervorgang derart angefroren, jedoch nicht vollständig durchgefroren wird, dass seine mittlere Temperatur weniger als 5°C, bevorzugt weniger als 1°C, jedoch nicht weniger als 0°C beträgt.

8. Verfahren nach wenigstens einem der Ansprüche 5 bis 7, **dadurch gekennzeichnet, dass** dem Grundbrät während des Kuttervorgangs Hydrokolloide auf der Basis von Kohlehydraten wie Xanthan, Carboxymethylzellulose oder andere Stoffe aus der Gruppe der Hydrokolloide zugesetzt werden.

9. Verfahren nach wenigstens einem der Ansprüche 5 bis 8, **dadurch gekennzeichnet, dass** das Kuttern des Grundbräts derart durchgeführt wird, dass die Temperatur des Grundbräts am Ende des Kuttervorgangs höchstens 10°C, bevorzugt höchstens 8°C beträgt.

10. Verfahren nach wenigstens einem der vorhergehenden Ansprüche, **dadurch gekennzeichnet, dass** das Eis eine Temperatur von weniger als -20°C aufweist.

11. Verfahren nach wenigstens einem der vorhergehenden Ansprüche, **dadurch gekennzeichnet, dass** der Massenanteil des Eises bezogen auf die Gesamtmasse des Grundbräts zwischen 20% und 45% beträgt.

12. Verfahren nach Anspruch 11, **dadurch gekennzeichnet, dass** die zur Herstellung der Grundbräts verwendete Eismenge so bemessen wird, dass bis zum Schmelzen des zugesetzten Eises dem Grundbrät eine spezifische Energiemenge von mindestens 100kJ/kg, bevorzugt mehr als 125kJ/kg, besonders bevorzugt mehr als 150kJ/kg bezogen auf die Masse des Grundbräts entzogen werden.

13. Verfahren nach wenigstens einem der vorhergehenden Ansprüche, **dadurch gekennzeichnet, dass** das Pflanzenprotein aus Lupine oder Erbse stammt.

14. Verfahren nach wenigstens einem der vorhergehenden Ansprüche, **dadurch gekennzeichnet, dass** das Grundbrät außer durch das Eis zusätzlich gekühlt wird.

15. Verfahren nach wenigstens einem der vorhergehenden Ansprüche, **dadurch gekennzeichnet, dass** dem Grundbrät lösliche oder unlösliche Ballaststoffe wie Getreidefasern, Leguminosenfasern, Zitrusfasern, Glukane oder Pektine zugegeben werden.

16. Verfahren nach wenigstens einem der vorhergehenden Ansprüche, **dadurch gekennzeichnet, dass** dem Grundbrät zur Herstellung einer Streichwurst unlösliche mikropartikulierte oder mikrokugelförmige Proteinpräparate aus Pflanzenprotein und/oder Molkenprotein zugegeben werden.

17. Verfahren nach wenigstens einem der vorhergehenden Ansprüche, **dadurch gekennzeichnet, dass** dem Grundbrät wenigstens ein pflanzliches Öl zugegeben wird.

18. Verfahren nach Anspruch 17, **dadurch gekennzeichnet, dass** der zugesetzte Ölgehalt kleiner 10%, vorzugsweise kleiner 8% beträgt.

19. Verfahren nach wenigstens einem der Ansprüche 1 bis 16, **dadurch gekennzeichnet, dass** das Grundbrät ohne Zugabe von weiterem, nicht bereits im Fischfleisch vorhandenen Fett wie Speck, Öl oder Fettersatzstoffen hergestellt wird.

20. Wurstwaren wie Rohwürste, Brühwürste, Kochwürste oder Kochstreichwürste, beinhaltend Fischfleisch, hergestellt nach einem Verfahren gemäß wenigstens einem der vorhergehenden Ansprüche **dadurch gekennzeichnet, dass** sie als Fleisch ausschließlich Fischfleisch und als Fischfleisch ausschließlich Fischfleisch von einem Süsswasserwels der Überklasse Heterobranchidae enthalten und dass dem Fischfleisch Pflanzenprotein zugegeben ist.

21. Wurstwaren nach Anspruch 20, **dadurch gekennzeichnet, dass** sie kein weiteres, nicht bereits im Fischfleisch vorhandenes Fett wie Speck, Öl oder Fettersatzstoffe enthalten und dass ihr Fettgehalt weniger als 7% beträgt.

22. Wurstwaren nach Anspruch 21, **dadurch gekennzeichnet, dass** ihr Fettgehalt weniger als 5%, besonders bevorzugt weniger als 3% beträgt.

## Claims

1. A method for producing sausage products based on fish meat, wherein the fish meat is processed together with ice to form a base meat, wherein the ice has a temperature of less than -10°C, wherein fish meat is used exclusively for meat, wherein the fish meat comes from freshwater catfish of the genus Heterobranchidae, and wherein plant protein is added to the base meat.

2. The method according to claim 1, wherein at least a portion of the fish meat comes from a cross breed between a Clarias gariepinus and a Heterobranchus longfillis.

3. The method according to at least one of the preceding claims, wherein the fish meat used for producing the base meat mass has a fat content of less than 7%, preferably less than 5%, particularly preferably less than 3%.

4. The method according to at least one of the preceding claims, wherein salt and/or nitrate curing salt and/or spices and/or cutter helper are added for producing the base meat.

5. The method according to at least one of the preceding claims, wherein the fish meat at least in combination with the ice is processed into base meat in a cutter.

6. The method according to claim 5, wherein the ice is added at the beginning of the cutting process.

7. The method according to claim 5 or 6, wherein the fish meat is partially frozen before the cutting process, but not completely frozen, so that its average temperature is less than 5° C, preferably less than 1° C, but not less than 0° C

8. The method according to at least one of the claims 5 through 7, wherein hydrocolloids based on carbohydrates like xanthan gum and carboxymethylcellulose or other substances from the group of hydrocolloids are added to the base meat during the cutting process.

9. The method according to one of the claims 5 though 8, wherein the cutting of the base meat is performed so that the temperature of the base meat at the end of the cutting process is 10° C at the most, preferably 8° C at the most.

10. The method according to at least one of the preceding claims, wherein the ice has a temperature of less than minus 20° C.

11. The method according to at least one of the preceding claims, wherein a mass percentage of the ice with reference to a total mass of the base meat is between 20% and 45%.

12. The method according to claim 11, wherein an amount of ice used for producing the base meat is sized, so that a specific amount of energy of at least 100 kJ/kg, preferably more than 125 kJ/kg, particularly preferably more than 150 kJ/kg with reference to the base meat is removed from the base meat until the added ice is melted.

13. The method according to one of the preceding claims, wherein the plant protein is from a lupine or pea.

14. The method according to at least one of the preceding claims, wherein the base meat is being cooled in addition to being cooled through the ice.

15. The method according to at least one of the preceding claims, wherein soluble or non-soluble ballast materials like e.g. grain fibers, leguminous fibers, citrus fibers, glucanes or pectines are added to the base meat.

16. The method according to at least one of the preceding claims, wherein insoluble micro-particulated or micro-spherical protein products made from plant protein and/or lactic protein are added to the base meat for producing a spreading sausage.

17. The method according to at least one of the preceding claims, wherein at least one plant oil is added to the base meat.

18. The method according to claim 17, wherein the added oil content is less than 10%, preferably less than 8%.

19. The method according to at least one of the claims 1 through 16, wherein the base meat is produced without adding additional fats like lard, oil or fat substitutes that are not already present in the fish meat.

20. Sausage products comprising raw sausages, scalding sausages, cooking sausages or spreadable cooking sausages, each of which including fish meat produced according to a method according to one of the preceding claims, wherein the sausage products only include fish meat for meat and the fish meat comes from freshwater catfish of the genus Heterobranchidae exclusively and plant protein is added to the fish meat.

21. Sausage products according to claim 20, wherein no other fats like lard, oil or fat substitutes are added to the sausage products that are not already present in the fish meat, and that fat content of the sausage products is less than 7%.

22. Sausage products according to claim 21, wherein the fat content is less than 5%, particularly preferably less than 3%.

## Revendications

1. Procédé pour la fabrication de charcuterie à base de chair de poisson, la chair de poisson étant travaillée avec de la glace pour en faire une masse de cuisson de base, **caractérisé en ce que** la glace présente une température inférieure à -10°C et qu'uniquement de la chair de poisson est utilisée comme chair et que comme chair de poisson uniquement de la chair de poisson d'un poisson-chat d'eau douce de l'ordre heterobranchus est utilisée, des protéines végétales étant en plus ajoutées à la masse de cuisson de base.

2. Procédé selon la revendication 1, **caractérisé en ce qu'**au moins une partie de la chair de poisson provient d'un croisement d'un clarias gariepinus et d'un heterobranchus longifilis.

3. Procédé selon au moins l'une des revendications précédentes, **caractérisé en ce que** la chair de poisson utilisée pour la fabrication de la masse de cuisson de base présente un pourcentage de matières grasses inférieur à 7%, de préférence inférieur à 5%, de manière particulièrement préférée inférieur à 3%.

4. Procédé selon au moins l'une des revendications précédentes, **caractérisé en ce que**, pour la fabrication de la masse de cuisson de base, on ajoute en plus du sel et/ou du sel au nitrite pour salaison et/ou des épices et/ou des adjuvants de salaison.

5. Procédé selon au moins l'une des revendications précédentes, **caractérisé en ce que** de la chair de poisson est transformée en masse de cuisson de base au moins avec de la glace dans un désintégrateur.

6. Procédé selon la revendication 5, **caractérisé en ce que** la glace est ajoutée au début du processus de désintégration.

7. Procédé selon la revendication 5 ou 6, **caractérisé en ce que** la chair de poisson est légèrement congelée avant le processus de désintégration, sans toutefois être complètement congelée, de telle manière que sa température moyenne est inférieure à 5°C, de préférence inférieure à 1°C, cependant pas inférieure à 0°C.

8. Procédé selon au moins l'une des revendications 5 à 7, **caractérisé en ce que** des hydrocolloïdes à base d'hydrates de carbone comme le xanthane, la cellulose de carboxyméthyle ou d'autres substances du groupe des hydrocolloïdes sont ajoutés à la masse de cuisson de base pendant le processus de désintégration.

9. Procédé selon au moins l'une des revendications 5 à 8, **caractérisé en ce que** la désintégration de la masse de cuisson de base est effectuée de telle manière que la température de la masse de cuisson de base à la fin du processus de désintégration est au plus de 10°C, de préférence au plus de 8°C.

10. Procédé selon au moins l'une des revendications précédentes, **caractérisé en ce que** la glace a une température inférieure à -20°C.

11. Procédé selon au moins l'une des revendications précédentes, **caractérisé en ce que** le pourcentage en masse de la glace par rapport à la masse totale de la masse de cuisson de base se situe entre 20% et 45%.

12. Procédé selon la revendication 11, **caractérisé en ce que** la quantité de glace utilisée pour la fabrication de la masse de cuisson de base est mesurée de manière telle qu'une quantité d'énergie spécifique d'au moins 100 kJ/kg, de préférence de plus de 125 kJ/kg, de manière particulièrement préférée de plus de 150 kJ/kg par rapport à la masse de la masse de cuisson de base, est prélevée sur la masse de cuisson de base jusqu'à la fusion de la glace ajoutée.

13. Procédé selon au moins l'une des revendications précédentes, **caractérisé en ce que** les protéines végétales viennent du lupin ou du petit pois.

14. Procédé selon au moins l'une des revendications précédentes, **caractérisé en ce que** la masse de cuisson de base est refroidie de manière supplémentaire en plus de par la glace.

15. Procédé selon au moins l'une des revendications précédentes, **caractérisé en ce que** des fibres alimentaires solubles ou insolubles comme des fibres de céréales, des fibres de légumineuses, des fibres d'agrumes, des glucanes ou des pectines sont ajoutées à la masse de cuisson de base.

16. Procédé selon au moins l'une des revendications précédentes, **caractérisé en ce que** des préparations de microparticules ou de microbilles de protéines provenant de protéines végétales et/ou de protéines lactées sont ajoutées à la masse de cuisson de base pour fabriquer une saucisse à tartiner.

17. Procédé selon au moins l'une des revendications précédentes, **caractérisé en ce qu'**au moins une huile végétale est ajoutée à la masse de cuisson de base.

18. Procédé selon la revendication 17, **caractérisé en ce que** le taux d'huile ajouté est inférieur à 10%, de préférence inférieur à 8%.

19. Procédé selon au moins l'une des revendications 1 à 16, **caractérisé en ce que** la masse de cuisson de base est fabriquée sans ajout d'autre gras qui n'est pas déjà présent dans la chair de poisson comme du lard, de l'huile ou des substituts de gras.

20. Charcuterie comme saucisses crues, saucisses échaudées, saucisses à cuire ou saucissons à tartiner contenant de la chair de poisson, fabriquées selon un procédé selon au moins l'une des revendications précédentes, **caractérisée en ce qu'**elle contient uniquement de la chair de poisson comme chair et que comme chair de poisson uniquement de la chair de poisson d'un poisson-chat d'eau douce de l'ordre heterobranchus et que des protéines végétales sont ajoutées à la masse de cuisson de base.

21. Charcuterie selon la revendication 20, **caractérisée en ce qu'**elle ne contient pas d'autre gras qui n'est pas déjà présent dans la chair de poisson comme du lard, de l'huile ou des substituts de gras et que son taux de matières grasses est inférieur à 7%.

22. Charcuterie selon la revendication 21, **caractérisé en ce que** son taux de matières grasses est inférieur à 5%, de manière particulièrement préférée inférieur à 3%.
